(19) Europäisches Patentamt

European Patent Office

Office européen des brevets

(11) **EP 0 788 099 B1**

(12) **EUROPEAN PATENT SPECIFICATION**

(45) Date of publication and mention
of the grant of the patent:
**05.09.2001 Bulletin 2001/36**

(51) Int Cl.[7]: **G11B 11/10**

(21) Application number: **97104811.1**

(22) Date of filing: **07.02.1992**

(54) **System and method of reproducing signals recorded on a magnetooptic recording medium**

System und Verfahren zur Wiedergabe von auf einem magnetooptischen Aufzeichungsmedium aufgezeichneten Signalen

Système et méthode pour la réproduction de signaux enregistrés sur un milieu d'enregistrement magnéto-optique

(84) Designated Contracting States:
**AT DE FR GB**

(30) Priority: **08.02.1991 JP 1807291**
**08.02.1991 JP 1807591**

(43) Date of publication of application:
**06.08.1997 Bulletin 1997/32**

(62) Document number(s) of the earlier application(s) in accordance with Art. 76 EPC:
**92102091.3 / 0 498 461**

(73) Proprietor: **SONY CORPORATION**
**Tokyo (JP)**

(72) Inventors:
• **Ohta, Masumi**
**Shinagawa-ku, Tokyo (JP)**
• **Nakao, Isamu**
**Shinagawa-ku, Tokyo (JP)**
• **Aratani, Katsuhisa**
**Shinagawa-ku, Tokyo (JP)**

(74) Representative: **Müller, Frithjof E., Dipl.-Ing. et al**
**Patentanwälte**
**MÜLLER & HOFFMANN,**
**Innere Wiener Strasse 17**
**81667 München (DE)**

(56) References cited:
**EP-A- 0 318 925      EP-A- 0 383 386**
**EP-A- 0 405 742      EP-A- 0 415 449**
**EP-A- 0 492 581      US-A- 4 932 012**

**Description**

## BACKGROUND OF THE INVENTION

The present invention relates to a system and method of reproducing signals recorded on a magneto-optic recording medium, for reading information bits (magnetic domains) by magneto-optic effect and, more particularly, to techniques for enhancing track recording density and track density, and reproducing information recorded in a high density and for reproducing with high resolution.

According to the fundamental principle of a magneto-optic recording system, a portion of a magnetic thin film is heated locally to a temperature higher than the Curie temperature or the compensation temperature to nullify the coercive force of the heated portion and to invert the direction of magnetization of the heated portion in the direction of an external recording magnetic field applied thereto. Accordingly, the magneto-optic recording system employs a magneto-optic recording medium comprising a transparent substrate, such as a polycarbonate substrate, and a laminated recording layer formed on one major surface of the transparent substrate, and consisting of a magnetic recording film having an easy direction of magnetization perpendicular to its surface and having excellent magneto-optic characteristics, such as an amorphous rare earth metal-transition metal alloy film, a reflecting film and a dielectric film. The magneto-optic recording medium is irradiated with a laser beam from the side of the transparent substrate to read signals.

The track recording density of optical disks, such as digital audio disks (so-called compact disks) and video disks, as well as a magneto-optic recording medium, is dependent principally on the SN ratio of reproduced signals, and the signal quantity of reproduced signals is greatly dependent on the period of the bit string of recorded signals, the wavelength of a laser beam emitted by the laser of a reproducing optical system, and the numerical aperture of the objective lens of the reproducing optical system.

The bit period f corresponding to a detection limit is expressed by: $f = \lambda/2N.A.$, where $\lambda$ is the wave length of a laser beam emitted by the laser of the reproducing optical system, and N.A. is the numerical aperture of the objective lens.

Since crosstalk limiting the track density is dependent mainly on the intensity distribution (profile) of the laser beam on the surface of the recording medium, the track density, similarly to the bit period, is expressed generally by a function of $\lambda/2$ and the numerical aperture N.A.

Accordingly, the reproducing optical system employs, basically, a laser that emits a laser beam of a short wavelength $\lambda$ and an objective lens having a large numerical aperture N.A.

However, according to the present status of the art, an improvement in the wavelength $\lambda$ of the laser beam and the numerical aperture N.A. of the objective lens is limited. On the other hand, techniques have been developed to improve recording density through the improvement of the construction of the magneto-optic recording medium and the reading method.

For example, the applicant of the present patent application proposed a system that improves reproducing resolution by locally enlarging, reducing or extinguishing an information bit (magnetic domain) in reproducing a signal in Japanese Patent Laid-open (Kokai) Nos. Hei 1-143041 and Hei 1-143042, both incorporated herein. This system employs a magnetic recording layer of an exchange-coupled multilayer film consisting of a reproducing layer, an intermediate layer and a record hold layer, and reduces interference between information bits in reproducing signals by heating a magnetic domain of the reproducing layer with a reproducing light beam to enlarge, reduce or extinguish a portion of the magnetic domain heated at a high temperature to enable the reproduction of signals of a period beyond the limit of diffraction of light.

Although the track recording density can be improved to some extent by this system, it is difficult to improve the track density by this system.

Under such circumstances, the applicant of the present patent application proposed a novel signal reproducing method capable of preventing crosstalk and improving both track recording density and track density in Japanese Patent Laid-open (Kokai) No. Hei 1-229395, incorporated herein. This method employs a recording layer of a multilayer film consisting of a reproducing layer and a record hold layer magnetically coupled with the reproducing layer. The direction of magnetization of the reproducing layer is turned beforehand in a direction to erase signals in the reproducing layer. The reproducing layer is heated to a temperature higher than a predetermined temperature by irradiating the reproducing layer with a laser beam when reproducing signals so as to transfer only the magnetic signals written in the heated region of the record hold layer to the reproducing layer in order to read the magnetic signals.

In reading information recorded in information recording bits, i.e., bubble magnetic domains, formed in a magneto-optic recording medium by locally heating the magneto-optic recording medium with a laser beam by a magneto-optic recording/reproducing system utilizing magneto-optic mutual action, namely, the Kerr effect or Faraday effect, as explained above the recording bits must be formed in a reduced size to increase recording density for magneto-optic recording. However, the reduction in size of recording bits entails problems in resolution, as described above, in reproducing recorded information. Resolution is dependent on the wavelength of the reproducing laser beam, and the numerical aperture N.A. of the objective lens.

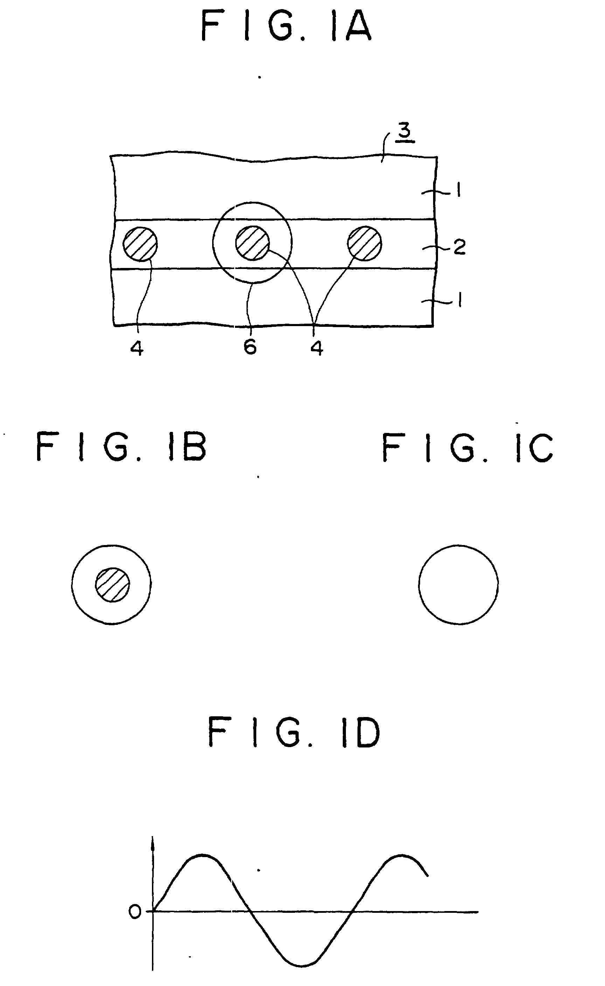

A conventional magneto-optic recording/reproducing system will be described with reference to Figures 1A, 1B, 1C, and 1D. Figure 1A is a typical top plan view of a recording pattern. A method of reproducing binary signals "1" and "0" recorded in recording bits 4, i.e. shaded portions in Figure 1A, of a magneto-optic recording medium 3, such as a magneto-optic disk, will be described. A reading laser beam forms a circular spot 6 on the magneto-optic recording medium 3. When recording bits 4 are spaced so that the spot 6 is able to include only one recording bit 4 as shown in Figure 1A, the spot 6 includes a recording bit 4 as shown in Figure 1B, or the spot 6 does not include any recording bit 4 as shown in Figure 1C. Accordingly, if the recording bits 4 are arranged at equal intervals, the output signal has, for example, a sinusoidal waveform whose amplitude varies alternately above and below a reference level 0 as shown in Figure 1D.

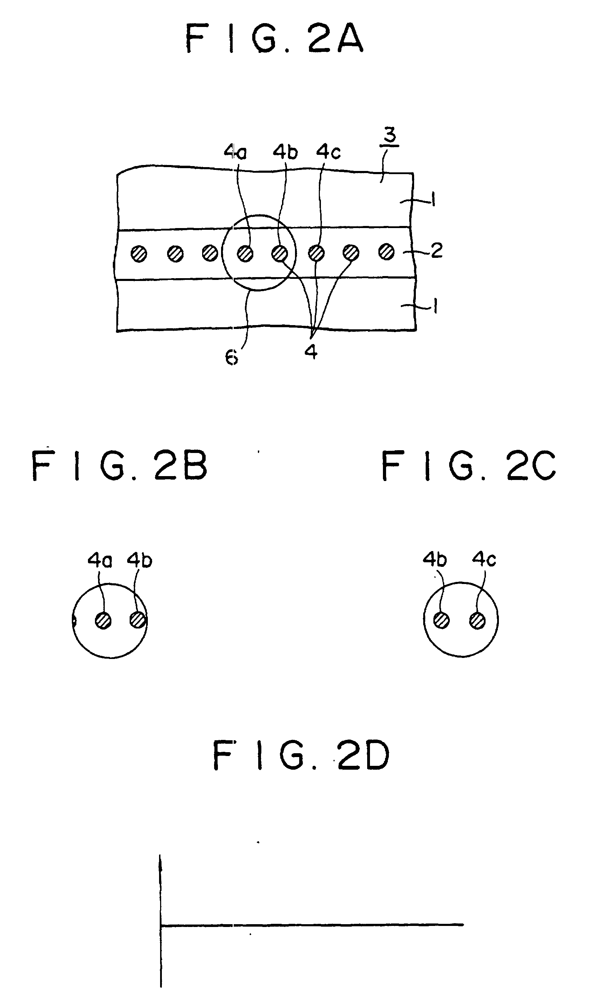

However, if recording bits 4 are arranged in a high density as shown in a typical plan view of a recording pattern in Figure 2A, it is possible that the spot 6 includes a plurality of recording bits 4. Since a reproduced output signal provided when the two recording bits 4a and 4b among the successive three recording bits 4a, 4b, and 4c are included in one spot 6 as shown in Figure 2B and a reproduced output signal provided when the two recording bits 4b and 4c are included in one spot 6 as shown in Figure 2C are the same and cannot be discriminated from each other, the reproduced output signals form, for example, a straight line as shown in Figure 2D.

Since the conventional magneto-optic recording/reproducing system reads directly the recording bits 4 recorded on the magneto-optic recording medium 3, the restrictions on the reproducing resolutions cause problems in S/N (C/N - carrier-to-noise ratio) and hence the magneto-optic recording/reproducing system is unable to achieve high-density recording and reproducing, even if the magneto-optic recording/reproducing system is capable of high-density recording, i.e., high-density bit formation.

The reproducing resolution dependent on the wavelength $\lambda$ of the laser beam and the numerical aperture N. A. of the lens must be improved to solve the problems in S/N (C/N). To solve these problems, the applicant of the present patent application proposed previously a magneto-optic recording/reproducing system capable of very high resolution (hereinafter referred to as "MSR system"), for example, in Japanese Patent Application No. Hei 1-225685, "Magneto-optic Recording/Reproducing Method", incorporated herein.

The MSR system enhances the reproducing resolution by reading only the recording bit 4 of a temperature in a predetermined temperature range on a magneto-optic recording medium by utilizing a temperature distribution formed by the relative movement between the magneto-optic recording medium and the spot 6 of the reproducing beam.

The MSR systems are classified into those of a so-called emergence type and those of an extinction type.

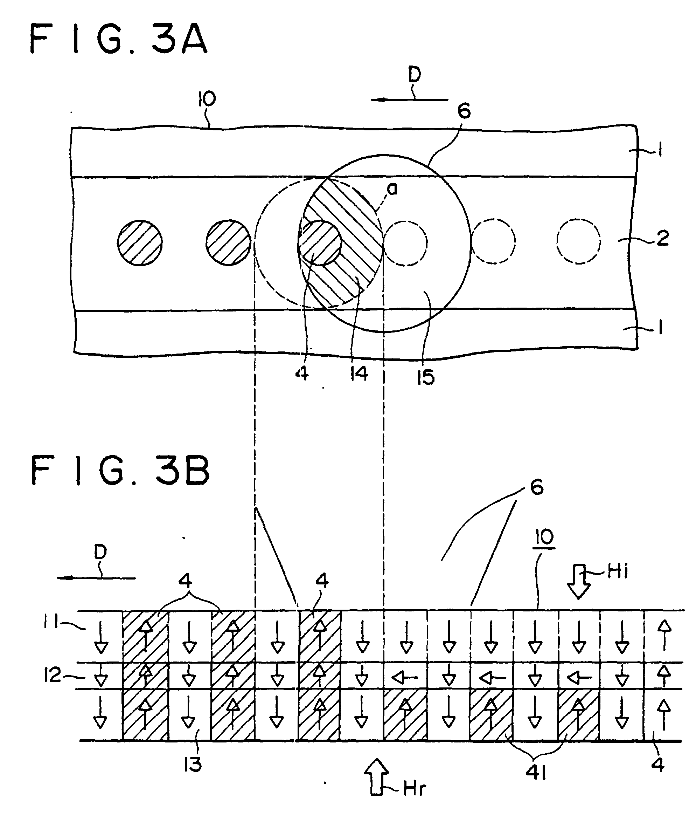

The MSR system of an emergence type is disclosed by EP-A-0 492 581 which falls under the provision of Art. 54(3) will be described with reference to Figures 3A and 3B. Figure 3A is a typical top plan view of a recording pattern formed on a magneto-optic recording medium 10, and Figure 3B is a typical sectional view showing a state of magnetization of the magneto-optic recording medium. As shown in Figure 3A, the magneto-optic recording medium 10 moves in the direction of an arrow D relative to the spot 6 of a laser beam. As shown in Figure 3B, the magneto-optic recording medium 10 is, for example, a magneto-optic disk having at least a reproducing layer 11 and a recording layer 13 formed of perpendicularly magnetizable films. The reproducing layer 11, the recording layer 13 and an intermediate layer 12 formed between the reproducing layer 11 and the recording layer 13 are provided. Arrows in the layers 11, 12, and 13 in Figure 3B indicate the directions of magnetic moment. In Figure 3B, magnetic domains indicated by downward arrows are in an initial state. Information recording bits 4 are formed at least in the recording layer 13 with magnetic domains magnetized upward for binary values "1" or "0".

In reproducing recorded information signals from the magneto-optic recording medium 10, an external initializing magnetic field H, is applied to the magneto-optic recording medium 10 to magnetize the reproducing layer 11 downward, as viewed in Figure 3B, for initialization. Although the recording bits of the reproducing layer 11 are extinguished by initialization, the respective directions of magnetization of regions in the reproducing layer 11 and the recording layer 13 corresponding to the recording bits 4 are maintained reverse to each other by magnetic domain walls formed in the intermediate layer 12, so that the recording bits 4 remain in latent recording bits 41.

A reproducing magnetic field $H_r$ of a direction reverse to that of the initializing magnetic field $H_i$ is applied at least to the reproducing regions of the magneto-optic recording medium 10. As the magneto-optic recording medium 10 moves, the region having the initialized latent recording bit 41 comes under the spot 6. Since the duration of irradiation with the beam in the front side, the left side in Figures 3A and 3B, on the magneto-optic recording medium 10 with respect to the direction of movement is longer, a high-temperature region 14 is formed in the front side of the spot 6 as indicated by a shaped area enclosed by a broken line a. In the high-temperature region 14, magnetic domain walls in the intermediate layer 12 disappear, and the magnetization of the recording layer 13 is transferred to the reproducing layer 11 by exchange force, so that the latent recording bit 41 in the recording layer 13 emerges in the reproducing layer 11 in a reproducible recording bit 4.

Accordingly, the recording bit 4 can be read out by detecting the rotation of the plane of polarization of the spot 6 by magneto-optic effect, namely, Kerr effect or Faraday effect, corresponding to the direction of magnetization of the reproducing layer 11. Latent recording bits 41 in a low-temperature region 15, other than the high-temperature region 14, in the spot 6 do not emerge into the reproducing layer 11, and hence the reproducible recording bit 4 is included only in the narrow high-tamperature region 14. Therefore, even if information is recorded in a high recording density on the magneto-optic recording medium 10 capable of high-density recording, in which a plurality of recording bits 4 are included in the spot 6, only one of the recording bits 4 can be read for high-resolution signal reproducing.

To carry out signal reproducing in such a mode, the initializing magnetic field H., the reproducing magnetic field H., the respective coercive force, values of thickness, intensities of magnetization and values of domain wall energy of the magnetic layers are determined selectively according to the: temperature of the high-temperature region 14 and that of the low-temperature region 15. The coercive force $H_{c1}$, thickness $h_1$ and saturation magnetization $M_{s1}$ of the reproducing layer 11, and the coercive force $H_{c3}$, thickness h, and saturation magnetization $M_{s3}$ of the recording layer 13 must meet an expression in Mathematical 1 to initialize only the reproducing layer 11.

(Mathematical 1)

$$H_1 > H_{c1}, + \sigma_{w2}/2M_{s1} . h_1$$

where $\sigma_{w2}$ is domain wall energy of the magnetic domain wall between the reproducing layer 11 and the recording layer 13.

An expression in Mathematical 3 must be met to maintain the information recorded in the recording layer 13 by the magnetic field.

(Mathematical 3)

$$H_1 < H_{c3} - \sigma_{w2}/2M_{s3} . h_3$$

An expression in Mathematical 4 must be met to maintain the magnetic domain walls formed in the intermediate layer 12 between the reproducing layer 11 and the recording layer 13 after the initializing magnetic field H, has been applied to the magneto-optic recording medium.

(Mathematical 4)

$$H_{c1} > \sigma_{w2}/2M_{s1} . h_1$$

An expression in Mathematical 5 must be met to heat the high-temperature region 14 at a selected temperature $T_H$.

(Mathematical 5)

$$H_{c1} - \sigma_{w2}/2M_{s1} . h_1 < H < H_{c1} + \sigma_{w2}/2M_{s1} . h_1$$

The magnetization of the latent recording bits 41 of the recording layer 13 can be transferred to, namely, binary values "1" and "O", which can be made to emerge in only regions of the reproducing layer 11 corresponding to the magnetic domain walls of the intermediate layer 12 by applying the reproducing magnetic field $H_r$ meeting the expression in Mathematical 5.

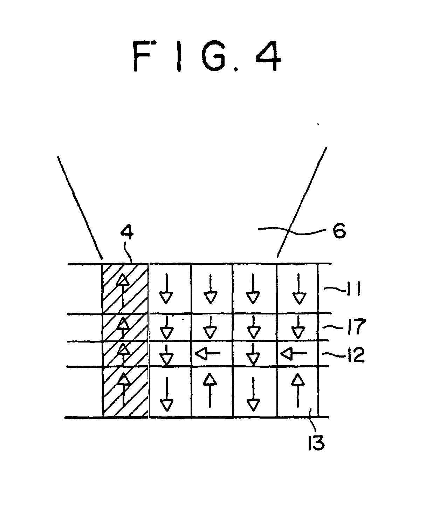

Although the magneto-optic recording medium 10 employed by the MSR system has the reproducing layer 11, the intermediate layer 12 and the recording layer 13 forming a three-layer construction, the MSR system may employ a four-layer magneto-optic recording medium additionally provided with an auxiliary reproducing layer 17 between the reproducing layer 11 and the intermediate layer 12 as shown in an enlarged schematic sectional view in Figure 4.

The auxiliary reproducing layer 17 supplements the characteristics of the reproducing layer 11 to compensate the coercive force of the reproducing layer 11 at a room temperature to stabilize the magnetization of the reproducing layer 11 caused by the initializing magnetic field $H_i$ regardless of the existence of magnetic domain walls and to decrease the coercive force sharply at a temperature near the reproducing temperature so that the magnetic domain walls of the intermediate layer 12 expand into the auxiliary reproducing layer 17 to finally invert the reproducing layer 11 and to extinguish the magnetic domain walls for satisfactory emergence of the recording bits.

The coercive force $H_{c1}$ of the reproducing layer 11 of a four-layer magneto-optic recording medium provided with the auxiliary reproducing layer 17 is substituted by $H_{CA}$ as expressed by an expression in Mathematical 6, and $\sigma_{w2}/M_{s1} . h_1$ is substituted *by* $\sigma_{w2}/(M_{s1} . h_1 + M_{ss} . h_s)$.

(Mathematical 6)

$$H_{CA} = (M_{s1} \cdot h_1 \cdot H_{c1} + M_{ss} \cdot h_s \cdot H_{cs})/(M_{s1} \cdot h_1 + M_{ss} \cdot h_s).$$

where $H_{c1} < H_{CA} < H_{cs}$ for the MSR system of an emergence type.

In Mathematical 6, $M_{cs} h_s$ and $H_{cs}$ are the saturation magnetization, thickness and coercive force, respectively, of the auxiliary reproducing layer 17.

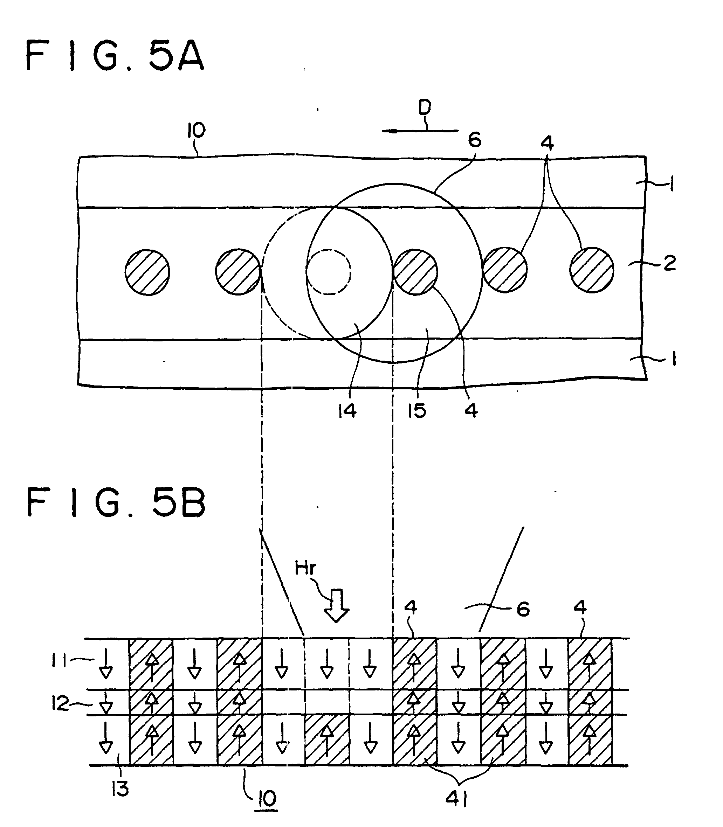

The MSR system of an extinction type will be described hereinafter with reference to Figures 5A and 5B. Figure 5A is a typical top plan view of a recording pattern formed on a magneto-optic recording medium 10, and Figure 5B is a typical sectional view showing a state of magnetization, in which parts like or corresponding to those shown in Figures 3A and 3B are denoted by the same reference characters and the description thereof will be omitted to avoid duplication. This magneto-optic recording medium does not need any initializing magnetic field $H_i$.

A reproducing operation for reproducing information recorded on the magneto-optic recording medium 10 will be described. The high-temperature region 14 is heated so that an expression in Mathematical 7 is satisfied, and then, an external reproducing magnetic field $H_r$ is applied to the magneto-optic recording medium 10 to extinguish recording bits 4 in the high-temperature region 14 included in the spot 6 of a laser beam in the reproducing layer 11 magnetized downward as viewed in Figure 5B. Thus, the MSR system of an extinction type enables information recorded in only the recording bits 4 in the low-temperature region 15 in the spot 6 to be reproduced to improve the resolution.

(Mathematical 7)

$$H_r > H_{c1} + \sigma_{w2}/2M_{s1} \cdot h_1$$

However, the conditions including the coercive force are determined so that the recording bits 4 of the recording layer 13 remain in latent recording bits 41 in an extinction state to hold the magnetization of the recording layer 13, i.e., the recording bits 4, are transferred to the reproducing layer 11 and held therein in a reproducible state at a room temperature.

The foregoing MSR systems of an emergence type and an extinction type reproduce the recording bit in a local region included in the spot of the recording laser beam to reproduce the information in the reproducting layer 11 and to achieve enhanced resolution.

In reproducing signals by these previously proposed signal reproducing methods, however, the area to be transferred to the reproducing layer (reproducible area) expands with the increase of reproducing power, which deteriorates frequency characteristics of reproduction.

### SUMMARY OF THE INVENTION

The present invention has been made in view of the foregoing problems and it is therefore an object of the present invention to further improve the reproducing resolution, namely, S/N (C/N Carrier-to-Noise ratio), in the MSR system.

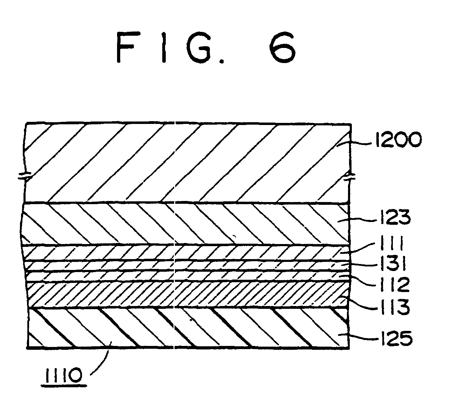

According to an embodiment of the present invention, a magneto-optic recording medium as shown in Figure 6 is provided having at least a reproducing layer 111, an auxiliary reproducing layer 131 and a recording layer 113 which are coupled magnetically. The reproducing layer 111 is heated with a laser beam to transfer magnetic signals recorded on the recording layer 113 to the reproducing layer 111. The magnetic signals are converted into light signals by magneto-optic effect for reading. The reproducing layer 111 is formed of a ferromagnetic material having a compensation temperature $T_{come}$ nearly equal to the Curie temperature $T_{cs}$ of the auxiliary reproducing layer 131.

### BRIEF DESCRIPTION OF THE DRAWINGS

The above and other objects, features and advantages of the present invention will become more apparent from the following description taken in connection with the accompanying drawings, in which:

Figures 1A to 1D are views for assistance in explaining a conventional magneto-optic recording/reproducing system;

Figures 2A to 2D are views for assistance in explaining a conventional magneto-optic recording/reproducing system;

Figures 3A and 3B are views for assistance in explaining a MSR system of an emergence type;

Figure 4 is a typical sectional view of a magneto-optic recording medium;

Figures 5A and 5B are views for assistance in explaining a MSR system of an extinction type;

Figure 6 is a diagrammatic sectional view of a magneto-optic recording medium in an embodiment according to the present invention;

Figures 7A and 7B are diagrams showing a temperature distribution of an area of the magneto-optic recording medium corresponding to the spot of a beam;

Figure 8 is a perspective view of a reproducing system for reproducing information from a magneto-optic recording medium in accordance with the present invention;

Figures 9A and 9B are diagrammatic views for assistance in explaining a manner of reproducing information from a magneto-optic recording medium in accordance with the embodiment of the present invention;

Figure 10 is a graph showing the variation of measured output with the power of the reproducing beam;

Figure 11 is a graph showing the measured relation between bit length and C/N; and

Figures 12A to 12D are diagrammatic views for assistance in explaining a manner of reproducing information from a magneto-optic recording medium in accordance with the embodiment of the present invention.

## DESCRIPTION OF THE PREFERRED EMBODIMENTS

A preferred embodiment of the present invention will be described hereinafter with reference to the accompanying drawings.

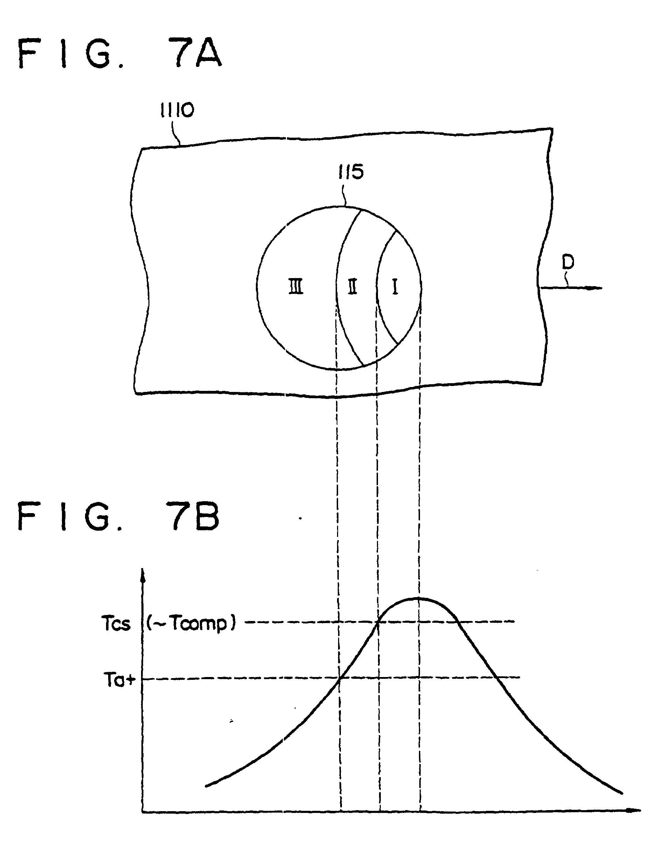

As shown in Figure 7A, when the magneto-optic recording medium in accordance with the embodiment of the present invention moves in the direction of an arrow D, namely from right to left as viewed in Figure 7A, the magneto-optic recording medium is heated with a laser beam so that an area in the spot 115 of the laser beam is heated in a temperature distribution as shown in Figure 7B, in which the temperature of the front portion of the magneto-optic recording medium 1110 with respect to the direction of movement thereof relative to the spot 115 indicated by the arrow D is the highest because the duration of irradiation of the front portion with the spot 115 is the longest.

The temperature decreases from the high-temperature region toward the back portion with respect to the direction of movement indicated by the arrow D.

In reading recording bits formed in the magneto-optic recording medium 1110 in accordance with the embodiment of the present invention, a first heated region I is heated at a temperature nearly equal to the Curie temperature $T_{cs}$ of the auxiliary reproducing layer 131, i.e. a temperature higher than the compensation temperature $T_{comp}$ of the reproducing layer 111. A second heated region II is heated at a predetermined temperature $T_{ar+}$ at which the coercive force $H_{c1}$ of the reproducing layer 111 is reduced below the exchange force between the reproducing layer 111 and the recording layer 113. This is lover than the temperature of the first heated region I. A third heated region III is heated at a temperature lower than the temperature of the second heated region II. The regions differ from each other in function. These regions are formed in an area corresponding to the spot 115 of the reading laser beam as shown in Figures 7A and 7B. Only the latent recording bits in the recording layer 113 in a region corresponding to the narrow second heated region II are transferred to the reproducing layer for reading.

A magneto-optic recording medium 1110 has a magneto-optic recording layer consisting of a reproducing layer 111, an auxiliary reproducing layer 131, an intermediate layer 112 and a recording layer 113, which are coupled magnetically.

The reproducing layer 111, the auxiliary reproducing layer 131, the intermediate layer 112 and the recording layer 113 are formed sequentially in that order by continuous sputtering on a transparent dielectric layer 123, for example, a SiN film having a thickness of 800 Å, that serves as a protective layer or an interference layer formed on a transparent substrate 1200 of glass, an acrylic or polycarbonate. A protective film 125 of a nonmagnetic metal or a dielectric material, for example, a SiN film having a thickness of 800 Å, is formed over the recording layer 113.

At least the reproducing layer 111, and preferably each of the auxiliary reproducing layer 131, the intermediate layer 112, and the recording layer 113 in addition to the reproducing layer, are ferrimagnetic films of a rare earth metal-transition metal in which the magnetic moment of a rare earth metal (RE) and that of a transition metal (TM) are antiferromagnetically coupled.

The reproducing layer 111 and the auxiliary reproducing layer 131 are films in which a rare earth metal sublattice is dominant (hereinafter referred to as "RE-rich films") at an ordinary temperature.

The intermediate layer 112 and the recording layer 113 may be a transition metal sublattice dominant film (hereinafter referred to as "TM-rich films") or RE-rich films at an ordinary temperature.

The reproducing layer 111 and the auxiliary reproducing layer 131 formed so that the coercive force $H_{CA}$ defined by the expression in Mathematical 5 is in the range of 0.9 to 5 kOe when the intermediate layer 112 is a RE-rich film, or in the range of 1 to 4 kOe when the intermediate layer 112 is a TM-rich film.

The reproducing layer 111 is a layer that contributes substantially to reading recorded information, namely to the magneto-optic effect (Kerr effect) in connection with the reading light. The reproducing layer 111 is formed of a material having a large angle of Kerr rotation, such as a perpendicularly magnetizable GdFeCo film having a Curie temperature $T_{c1}$ of 300°C or higher and a compensation temperature $T_{comp}$ on the order of 100°C, for example a $Gd_{25}(Fe_{85}Co_{15})_{75}$ film of 300 Å in thickness.

The auxiliary reproducing layer 131 is a perpendicularly magnetizable film having a Curie temperature $T_{cs}$ about equal to the compensation temperature $T_{comp}$ of the reproducing layer 111, for example, on the order of 100°C, and is for example, a $Tb_{44}(Fe_{95}Co_5)_{56}$ film of a thickness in the range of 50 Å to 110 Å.

The intermediate layer 112 is a perpendicularly magnetizable film of a comparatively small perpendicular anisotropy having a coercive force $H_3$, for example, smaller than 1.0 kOe and a Curie temperature $T_{c2}$ of about 250°C, for example, a $Gd_{19}(Fe_{95}Co_5)_{81}$ film of 100 Å in thickness.

The intermediate layer 112 may be a Re-rich film at an ordinary temperature, for example of $Gd_{29}(Fe_{95}Co_5)_{72}$.

The recording layer 113 may be a film having a thickness of 100 Å, a Curie temperature $T_{c3}$ of about 250°C, and a coercive force $H_3$ of 7 kOe, for example a TM-rich film perpendicularly magnetizable at an ordinary temperature of $Tb_{22}(Fe_{65}Co_{15})_{78}$ or a RE-rich film of $Tb_{25}(Fe_{85}Co_{19})_{79}$ perpendicularly magnetizable at an ordinary temperature.

Information is recorded, namely recording bits 141 are formed, at least in the recording layer 113 of the magneto-optic recording medium 1110 in accordance with the present invention by, for example, a magnetic field modulation system.

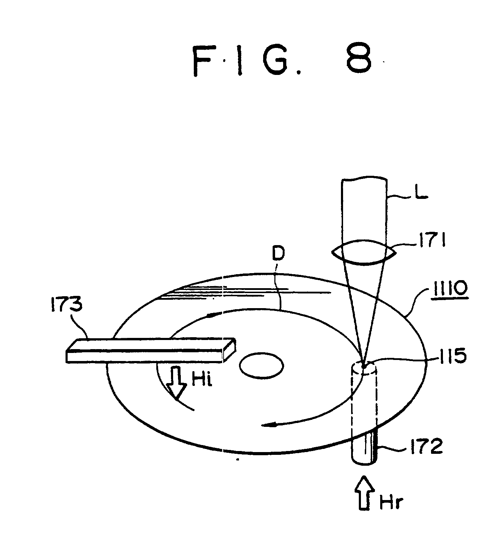

In reading information from the magneto-optic recording medium 1110, for example a magneto-optic disk having the recording layer 113 in which the information is recorded in recording bits 141, a light beam such as a linearly polarized laser beam L of 780 nm in wavelength is emitted by a semiconductor laser, and is focused on the magneto-optic recording medium 1110 rotating in the direction of an arrow D on the side of the substrate 1200 described previously with reference to Figure 6 by an objective lens 171 as shown in, Figure 8.

The difference of the recording bit 141 from other regions in the rotation of the plane of polarization by the Kerr effect of the reproducing layer 111 is detected to read the information recorded in the recording bit 141.

A reproducing magnetic field applying means 172 is disposed near the spot 115 of the laser beam L on the magneto-optic recording medium 1110. The reproducing magnetic field applying means 172 applies a unidirectional reproducing magnetic field $H_r$ perpendicularly to the surface of the magneto-optic recording medium 1110.

An initializing magnetic field applying means 173 applies a unidirectional initializing magnetic field $H_i$ of a polarity reverse to that of the reproducing magnetic field $H_r$ to a region of the magneto-optic recording medium 1110 before the region comes into the spot of the laser beam L.

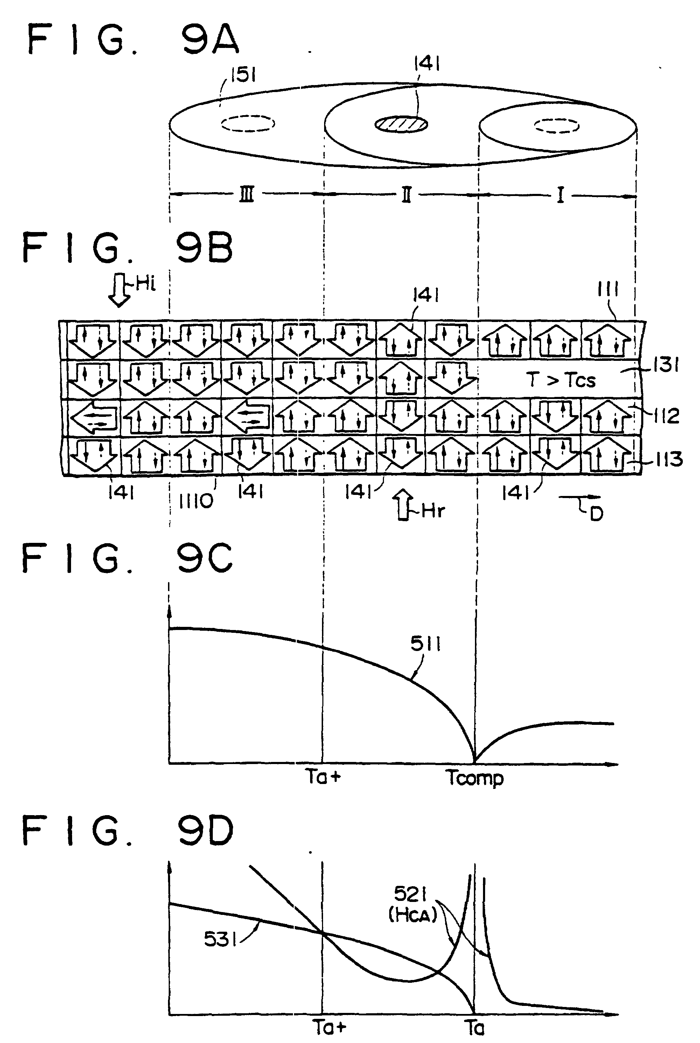

The reproducing function of the magneto-optic recording medium 1110 having the reproducing layer 111 and the auxiliary reproducing layer 131, which are RE-rich films at an ordinary temperature, and the intermediate layer 112 and the recording layer 113, which are TM-rich films at an ordinary temperature, will be described with reference to Figures 9A, 9B, 9C, and 9D.

Figure 9A shows heated regions I, II and III, such as those described with reference to Figure 7, formed on the magneto-optic recording medium 1110 by irradiating the magneto-optic recording medium 1110 moving in the direction of an arrow D relative to the spot 151 with the laser beam.

The first heated region I is heated at a temperature higher than the compensation temperature $T_{comp}$ of the reproducing layer 111, the second heated region II is heated at a temperature $T_{ar+}$ lower than the compensation temperature $T_{comp}$ and making the combined coercive force $H_{CA}$ of the reproducing layer 111 and the auxiliary reproducing layer 131 coincide substantially with the exchange force between the recording layer 113 and the reproducing layer 111 or between the recording layer 113 and the auxiliary reproducing layer 131, and the third heated region III is heated at a temperature lower than the temperature $T_{ca+}$.

In Figures 9C and 9D, curves 511, 521, and 531 indicate the magnetization $M_{s1}$ of the reproducing layer 111, the coercive force $H_{CA}$, and the exchange force between the recording layer 113 and the reproducing layer 111 or between the recording layer and the auxiliary reproducing layer 131, respectively, in the heated regions I, II and III.

In Figures 9C and 9D, temperature is measured on the horizontal axes. Actually, the temperature does not vary in a linear temperature distribution in the third heated region III, the second heated region II and the first heated region I. However, the temperature is supposed to vary in a linear temperature distribution in Figures 9C and 9D to facilitate understanding.

The respective magnetic moments in the reproducing layer 111, the auxiliary reproducing layer 131, the intermediate layer 112 and the recording layer 113 are shown typically in Figure 9B. In Figure 9B, arrows of continuous lines indicate TM magnetic moments, arrows of broken lines indicate RE magnetic moments, and large blank arrows indicate general magnetic moments in the layers 111, 131, 112, and 113.

Suppose that recording bits 141 are formed in the recording layer 113 by magnetizing regions in the recording layer 113 so that the direction of the general magnetic moments in the regions is upward as shown in Figure 9B.

As mentioned above, a laser beam L of 780 nm in wavelength is employed in reading the recording bits 141, namely, in reading out information. Since the transient metal contributes mainly to the Kerr effect in a wavelength range including the wavelength of the laser beam L, the signal obtained by detecting the angle of Kerr rotation is dependent on the direction of the TM magnetic moment indicated by the arrow of a continuous line in Figure 9B; and the signal is dependent on the direction of the TM magnetic moment in the reproducing layer 111, particularly in this magneto-optic recording medium.

In reproducing information, the initializing magnetic field applying means 173 (Figure 8) applies the initializing magnetic field $H_i$ of, for example, 4 kOe to the magneto-optic recording medium 1110 before the recording bits 141 (Figure 9B) come into the spot 151 of the reading laser beam to turn the respective magnetic moments of the reproducing layer 111 and the auxiliary reproducing layer 131 indicated by blank arrows in Figure 9B in the direction of the initializing magnetic field H., i.e., downward as viewed in Figure 9B.

The power of the reading laser beam is, for example, 3 mW.

The reproducing magnetic field $H_r$, for example, in the range of 200 to 600 Oe of a direction reverse to that of the initializing magnetic field $H_i$, is applied to an area corresponding to the spot 151.

Since the coercive force $H_{cs}$ of the recording layer 113 is comparatively large, and conditions defined by the expressions in Mathematicals 1, 2, and 3 are satisfied by magnetic domain walls formed in the intermediate layer 112, the direction of magnetization of the recording layer 113 is not inverted and hence the recording bits 141 remain in the recording layer 113.

In this state, the recording bit 141 comes into the spot 151 of the reading laser beam. Since the exchange force is small as compared with the coercive force $H_{CA}$ in the third heated region III as shown in Figure 9D, the recording bit 141 of the recording layer 113 is not transferred to the reproducing layer 111 and the auxiliary reproducing layer 131. Accordingly, the recording bit 141 is not read in the third heated region III.

Subsequently, the recording bit 141 enters the second heated region II, in which the coercive force $H_{CA}$ is smaller than the exchange force. Then, magnetic moment of the RE-rich reproducing layer 111 is turned upward, namely, the TM magnetic moment and the RE magnetic moment are turned in the direction of the TM magnetic moment and RE magnetic: moment of the recording layer 113, by the reproducing magnetic field $H_r$ of an upward direction reverse to that of the initializing magnetic field $H_i$, and consequently a magnetic domain, i.e. the recording bit, emerges.

That is, the direction of the initialized TM moment causing Kerr rotation is inverted to enable reading out the recording bit 141 differing from other regions in Kerr rotation with the laser beam L.

When the recording bit 141 enters the first heated region I heated at a temperature $T_a$ higher than the Curie temperature $T_{cs}$ of the auxiliary reproducing layer 131 or the compensation temperature $T_{comp}$ of the reproducing layer 111, the TM magnetic moment of the TM-rich reproducing layer 111 having a small coercive force $H_{c1}$ is turned upward by the reproducing magnetic field $H_r$, and consequently the recording bit 141 in the reproducing layer 111 is extinguished and is unable to be read.

Thus, the heated regions I and III serve as a mask, and the second heated region II serves as a window through which the recording bit can be read in the area corresponding to the spot 151. Since the width of the window is far smaller than the diameter of the spot 151, the recording bit 141 can be read even if the recording bit 141 is smaller than the diameter of the spot 151.

The width of the window determining the resolution can be reduced independently of the wavelength $\lambda$ and the numerical aperture N.A. defining the diameter of the spot 151.

It was confirmed through the measurement of a Kerr loop that the conditions shown in Figure 9D were satisfied.

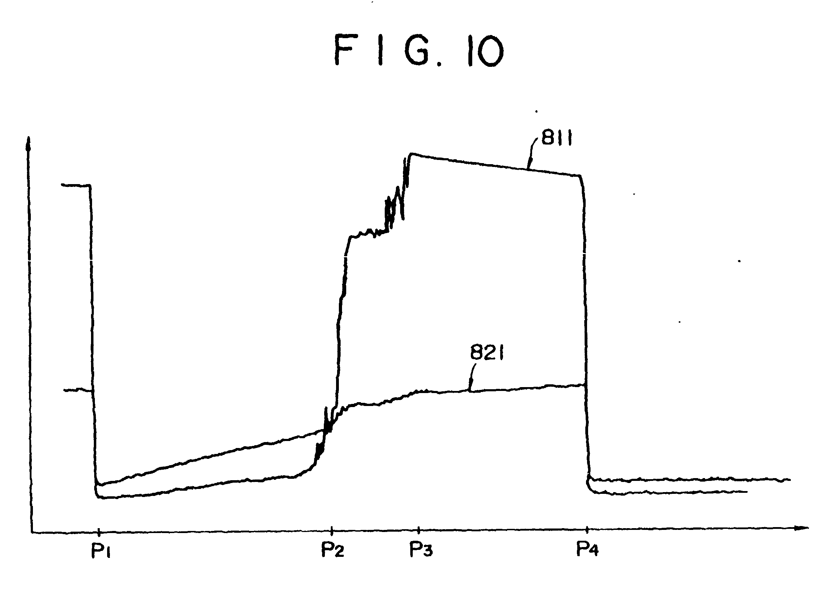

Figure 10 shows the measured variation of reproduced output signals reproduced from the magneto-optic disk thus constructed with the power of the reproducing laser beam L. In Figure 40, curves 811 and 821 indicate carrier level and noise level, respectively. The carrier level varies stepwise with the power of the reproducing laser beam L. In the power range of $P_1$ to $P_2$, the temperature of an area corresponding to the spot of the laser beam L is comparatively low and hence the MSR effect is not produced, namely, no window is formed in the area corresponding to the spot of the laser beam L. In the power range of $P_2$ and $P_3$, a window is formed in the high-temperature region on one side of the area corresponding to the spot. In the power range of $P_3$ to $P_4$, a window (the second heated region II) is formed in the narrow central region of the area corresponding to the spot between the first heated region I and the third heated region III serving as a mask.

In obtaining the measured results shown in Figure 10, a carrier of 10 MHz was measured by rotating a magneto-optic disk of 32 mm in radius at 2400 rpm, irradiating the magneto-optic disk with a laser beam of 19 mW for 15 msec, and applying a reproducing magnetic field $H_r$ of about 600 Oe to the magneto-optic disk.

When the period of the recording bits on the magneto-optic recording medium (the magneto-optic disk) was 0.8 $\mu$m, C/N was 35 dB or above.

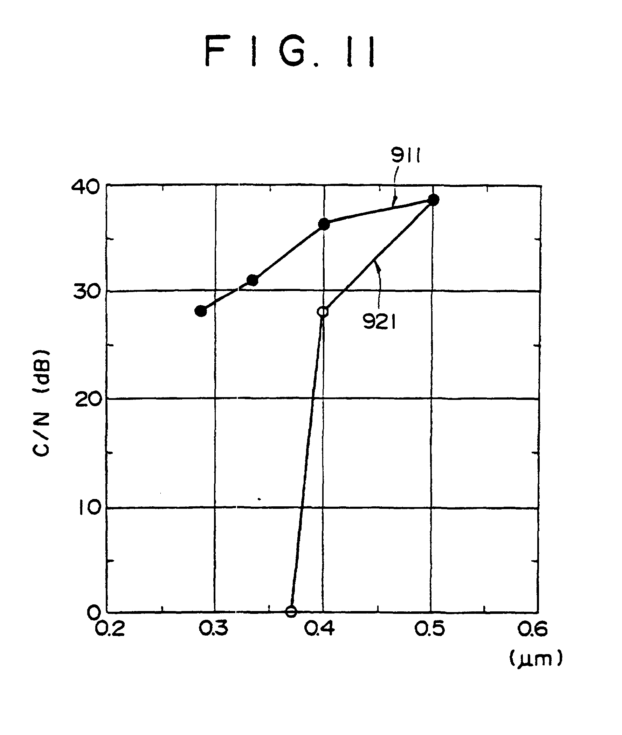

In Figure 11, a curve 91 indicates measured C/N, and a curve 92 indicates the C/N in reproducing information by a conventional magneto-optic recording/reproducing system other than the MSR system. As is obvious from Figure 11, the present invention improved C/N remarkably in a bit length range below 0.35 µm, which proved the effect of the present invention on the enhancement of resolution.

Although the intermediate layer 112 and the recording layer 113 employed in the foregoing embodiment are TM-rich films at an ordinary temperature, the same effect can be expected when the intermediate layer 112 and the recording layer 113 are RE-rich films.

The magneto-optic recording medium 1110 having the four-layer magneto-optic recording layer consisting of the reproducing layer 111, the auxiliary reproducing layer 131, the intermediate layer 112 and the recording layer 113, employed in the foregoing embodiment has an advantage that characteristics meeting the conditions necessary for the operating function can easily be obtained.

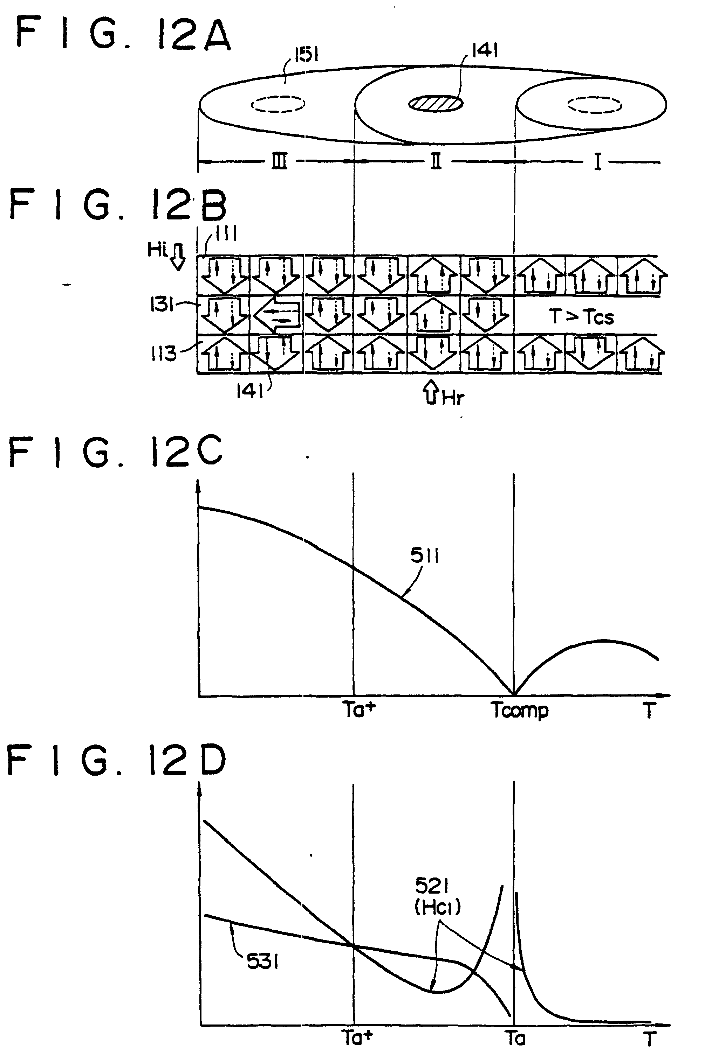

However, the magneto-optic recording layer may be of a three-layer construction consisting of a reproducing layer 111, an auxiliary reproducing layer 131 having the function of the intermediate layer 112, and a recording layer 113 as shown in Figure 12B.

Information can be reproduced from a magneto-optic recording medium having such a magneto-optic recording layer of a three-layer construction by the same reproducing operation as that described with reference to Figures 9A to 9D. In Figures 12A to 12D, parts corresponding to those shown in Figures 9A to 9D are denoted by the same reference characters and the description thereof will be omitted to avoid duplication.

The reproducing layer 111 of the magneto-optic recording medium of a construction shown in Figure 12B is formed of a ferrimagnetic material, such as a GdFeCo having a large angle of Kerr rotation, in which the RE magnetic moment and the TM magnetic moment are anti-ferromagnetically coupled. The reproducing layer 111 has a Re-rich composition having a compensation temperature $T_{comp}$ nearly equal to the Curie temperature $T_{cs}$ of the auxiliary reproducing layer 131 and a coercive force $H_{c1}$ not higher than, for example, 500 Oe.

The auxiliary reproducing layer 131 may be a Re-rich magnetic film at an ordinary temperature, such as a TbFe film having a perpendicular magnetic anisotropy necessary for controlling the shift of interfacial domain walls by an external magnetic field and having a high coercive force at an ordinary temperature. The combined coercive force $H_{CA}$ (the expression in Mathematical 5) of the reproducing layer 111 and the auxiliary reproducing layer 131 is about 2 kOe.

The Curie temperature $T_{cs}$ of the auxiliary reproducing layer 131 is lower than those of the other two layers, and the thickness of the same is, for example, 300 Å or above, which is greater than the thickness of the auxiliary reproducing layer of the four-layer magneto-optic recording layer.

The recording layer 113 is a TM-rich film or a RE-rich film, such as a TbFeCo film, having a coercive force $H_{c3}$ on the order of, for example, 10 kOe, a thickness of 450 Å and a Curie temperature of about 250°C.

As is apparent from the foregoing description, in reproducing the information recorded on the magneto-optic recording medium 1110 in accordance with the present invention, only the recording bit 141 within the narrow window formed in the second heated region II formed in an area corresponding to the spot of the reproducing laser beam between the regions serving as a mask, is reproduced so that the information can be reproduced in a very high resolution independent of the diameter of the spot of the laser beam, namely independent of the wavelength λ of the laser beam and the numerical aperture N.A. of the objective lens.

Furthermore, since the window is formed by forming the reproducing layer 111 and the auxiliary reproducing layer 131 so that the compensation temperature of the former and the Curie temperature of the latter are substantially equal to each other, and by favorably utilizing the characteristics of the reproducing layer 111 and the auxiliary reproducing layer 131, the information can be surely and stably reproduced at a high resolution.

**Claims**

1.  A method of reproducing signals recorded on a magneto-optic recording medium, said recording medium being formed of at least a recording layer (113) and a reproducing layer (111), which have ferrimagnetism which is consist of transition metal (TM) magnetic moment and Rear Earth metal (RE) magnetic moment and wherein information to be reproduced is recorded in the recording layer (113), comprising the steps of:

    turning the direction of magnetization of the reproducing layer (111) in a direction for initialization by applying an initializing magnetic field (Hi) to the magneto-optic recording medium before reproducing recorded signals; irradiating a spot of a laser beam on the recording medium with relative motion being provided such that the spot moves relative to the recording medium to form a region III of a temperature lower than a temperature $T_{a+}$, a region II of a temperature not lower than the temperature $T_{a+}$ and lower than a temperature $T_{cs}$, and a region I of a temperature not lower than the temperature $T_{cs}$ in an area in a spot of the laser beam, a reproducing magnetic field (Hr) being applied to the magneto-optic recording medium, the reproducing layer (111) maintaining the initialization in the region III, a magnetic coupling of the reproducing layer (111) and the recording layer (113) being cancelled and a direction of magnetization of the reproducing layer (111) being turned in a direction of the reproducing magnetic field in the region I, and the direction of a moment of the transition metal of the reproducing layer (111) being turned in a direction of a moment of the transition metal of the recording layer (113) in the region II so that a signal recorded in the recording layer (113) is transferred to the reproducing layer (111); and

reading the signal from the reproducing layer (111) by converting the signal into an optical signal by magneto-optic effect;

designing the recording layer (113) and reproducing layer (111) such that within an area of the spot of the laser beam a temperature distribution is generated in the recording medium, and wherein as a result of the temperature distribution, within the spot the first region I. second region II, and third region III result with the second region II lying between the first I and third III regions and having information recorded in the recording layer (113) being transferred to the reproducing layer (111) for readout therefrom by magnetooptical effect with the laser beam, and wherein the TM magnetic moments within the reproducing layer (111) in the first region I are all aligned in a first desired direction independently of magnetic domain signal patterns in the recording layer (113), and wherein the TM magnetic moments within the reproducing layer (111) in the third region III are aligned in a second desired direction independently of magnetic domain signal patterns in the recording layer (113), and wherein said first I and third regions III each act as a mask at each side of the second region where readout occurs at high resolution, **characterized in that** within the reproducing layer (111) said first desired direction of the TM magnetic moments in said first region I is the same direction as said second desired direction of the TM magnetic moments in said third region III.

**Patentansprüche**

1. Verfahren zum Abspielen von auf einem magnetooptischen Aufzeichnungsträger aufgezeichneten Signalen, wobei der Aufzeichnungsträger aus mindestens einer Aufzeichnungsschicht (113) und einer Abspielschicht (111) besteht, die Ferromagnetismus zeigt, der aus dem magnetischen Moment eines Übergangsmetalls (ÜM) und dem magnetischen Moment eines Seltenerdmetalls (SE) besteht, und wobei abzuspielende Information in der Aufzeichnungsschicht (113) aufgezeichnet ist, mit den folgenden Schritten:

   - Umdrehen der Magnetisierungsrichtung der Abspielschicht (111) in einer Initialisierungsrichtung durch Anlegen eines Initialisierungsfelds (Hi) an den magnetooptischen Aufzeichnungsträger vor dem Abspielen aufgezeichneter Signale;
   - Aufstrahlen eines Flecks eines Laserstrahls auf den Aufzeichnungsträger, wobei für eine Relativbewegung so gesorgt wird, dass sich der Fleck relativ zum Aufzeichnungsträger bewegt, um einen Bereich III mit einer Temperatur unter einer Temperatur $T_{a+}$, einen Bereich II mit einer Temperatur nicht unter der Temperatur $T_{a+}$ und unter einer Temperatur Tcs sowie einen Bereich I mit einer Temperatur nicht unter der Temperatur $T_{cs}$ in einem Gebiet in einem Fleck des Laserstrahls zu erzeugen, wobei dann, wenn ein Abspielmagnetfeld ($H_r$) an den magnetooptischen Aufzeichnungsträger angelegt wird, die Abspielschicht (111) die Initialisierung im Bereich III beibehält, eine magnetische Kopplung zwischen der Abspielschicht (111) und der Aufzeichnungsschicht (113) aufgehoben wird und die Magnetisierungsrichtung der Abspielschicht (111) im Bereich I in die Richtung des Abspielmagnetfelds gedreht wird, und die Richtung des Moments des Übergangsmetalls in der Abspielschicht (111) im Bereich II in der Richtung des Moments des Übergangsmetalls in der Aufzeichnungsschicht (111) gedreht wird, so dass ein in der Aufzeichnungsschicht (113) aufgezeichnetes Signal an die Abspielschicht (111) übertragen wird; und
   - Lesen des Signals aus der Abspielschicht (111) durch Wandeln desselben durch einen magnetooptischen Effekt in ein optisches Signal;
   - Konzipieren der Aufzeichnungsschicht (113) und der Abspielschicht (111) in solcher Weise, dass innerhalb eines Gebiets des Flecks des Laserstrahls im Aufzeichnungsträger eine Temperaturverteilung erzeugt wird, und wobei sich, als Ergebnis der Temperaturverteilung, innerhalb des Flecks der erste Bereich I, der zweite Bereich II und der dritte Bereich III ergeben, wobei der zweite Bereich II zwischen dem ersten Bereich I und dem dritten Bereich III liegt, und wobei in der Aufzeichnungsschicht (113) aufgezeichnete Information an die Abspielschicht (111) durch einen magnetooptischen Effekt mittels des Laserstrahls zum Auslesen übertragen wird, und wobei die ÜM-Magnetmomente innerhalb der Abspielschicht (111) im ersten Bereich I alle unabhängig von Magnetdomänen-Signalmustern in der Aufzeichnungsschicht (113) in einer ersten gewünschten Richtung ausgerichtet werden, und wobei die ÜM-Magnetmomente innerhalb der Abspielschicht (111) im dritten Bereich III unabhängig von Magnetdomänen-Signalmustern in der Aufzeichnungsschicht (113) in einer zweiten gewünschten Richtung ausgerichtet werden, und wobei der erste Bereich I und der dritte Bereich III jeweils auf jeder Seite des zweiten Bereichs als Maske wirken, wodurch das Auslesen mit hoher Auflösung erfolgt, **dadurch gekennzeichnet, dass** die erste gewünschte Richtung der ÜM-MagneMmomente im ersten Bereich I innerhalb der Abspielschicht (111) dieselbe Richtung wie die zweite gewünschte Richtung der ÜM-Magnetmomente im dritten Bereich III ist.

**Revendications**

1.  Procédé destiné à reproduire des signaux enregistrés sur un moyen d'enregistrement magnéto-optique, ledit moyen d'enregistrement étant formé d'au moins une couche d'enregistrement (113) et d'une couche de reproduction (111) qui présentent un ferrimagnétisme qui se compose d'un moment magnétique d'un métal de transition (TM) et d'un moment magnétique d'un métal des terres rares (RE) et dans lequel les informations à reproduire sont enregistrées dans la couche d'enregistrement (113), comprenant les étapes consistant à :

    faire pivoter la direction de magnétisation de la couche de reproduction (111) dans une direction destinée à l'initialisation en appliquant un champ magnétique d'initialisation (Hi) au moyen d'enregistrement magnéto-optique avant de reproduire les signaux enregistrés ;
    irradier un point lumineux d'un faisceau laser sur le moyen d'enregistrement , un déplacement relatif étant prévu de telle sorte que le point lumineux se déplace par rapport au moyen d'enregistrement pour former une région III de température inférieure à une température $T_a+$, une région II de température qui n'est pas inférieure à la température $T_a+$ et inférieure à une température $T_{cs}$, et une région I d'une température qui n'est pas inférieure $T_{cs}$ dans une zone située dans un point lumineux du faisceau laser, un champ magnétique de reproduction (Hr) étant appliqué au moyen d'enregistrement magnéto-optique, la couche de reproduction (111) conservant l'initialisation dans la région III, un couplage magnétique de la couche de reproduction (111) et de la couche d'enregistrement (113) étant annulé et une direction de magnétisation de la couche de reproduction (111) pivotant dans une direction du champ magnétique de reproduction dans la région I, et la direction d'un moment magnétique du métal de transition de la couche de reproduction (111) pivotant dans une direction d'un moment magnétique du métal de transition de la couche d'enregistrement (113) dans la région II de telle sorte qu'un signal enregistré dans la couche d'enregistrement (113) soit transféré vers la couche de reproduction (111) ; et
    lire le signal provenant de la couche de reproduction (111) en convertissant le signal en un signal optique par effet magnéto-optique ;
    concevoir la couche d'enregistrement (113) et la couche de reproduction (111) de telle sorte que, à l'intérieur d'une zone du point lumineux du faisceau laser, une répartition de température s'effectue dans le moyen d'enregistrement, et dans lequel, en raison de la répartition de température à l'intérieur du point lumineux, la première région I, la deuxième région II et la troisième région III font que la deuxième région II se situe entre la première I et la troisième III régions et présente des informations enregistrées dans la couche d'enregistrement (113) transférée vers la couche de reproduction (111) pour être lues à partir de cette dernière par effet magnéto-optique avec le faisceau laser, et dans lequel les moments magnétiques TM à l'intérieur de la couche de reproduction (111) dans la première région I sont tous alignés dans une première direction souhaitée, indépendamment de séquences de signaux de domaine magnétique présentes dans la couche d'enregistrement (113), et dans lequel les moments magnétiques TM à l'intérieur de la couche de reproduction (111) dans la troisième région III sont alignés dans une deuxième direction souhaitée, indépendamment de séquences de signaux de domaine magnétique présentes dans la couche d'enregistrement (113), et dans lequel lesdites première I et troisième III régions agissent chacune comme masquage de chaque côté de la deuxième région où a lieu la lecture à haute résolution, caractérisé en ce qu'à l'intérieur de la couche de reproduction (111) ladite première direction souhaitée des moments magnétiques TM situés dans ladite première région I est la même direction que ladite deuxième direction souhaitée des moment magnétiques TM situés dans ladite troisième direction III.

# F I G. IA

# F I G. IB

# F I G. IC

# F I G. ID

# F I G. 2A

# F I G. 2B

# F I G. 2C

# F I G. 2D

# F I G. 3A

# F I G. 3B

# F I G. 4

4

6

~11

~17

~12

13

# F I G. 5A

# F I G. 5B

# F I G. 6

# FIG. 7A

1110

115

III    II    I

D

# FIG. 7B

Tcs (~Tcomp)

Ta+

# F·I G. 8·

# F I G. 9A

151     141

Ⅲ     Ⅱ     Ⅰ

# F I G. 9B

Hi

141     111

131

$T > Tcs$

112

113

141   1110   141    141   Hr    141   D

# F I G. 9C

511

Ta+      Tcomp

# F I G. 9D

521
(HcA)

531

Ta+      Ta

20

# F I G. 10

# F I G. II

**EP 0 788 099 B1**

# F I G. 12A

# F I G. 12B

# F I G. 12C

# F I G. 12D

23